(19) Europäisches Patentamt / European Patent Office / Office européen des brevets

(11) **EP 4 049 186 B1**

(12) **EUROPÄISCHE PATENTSCHRIFT**

(45) Veröffentlichungstag und Bekanntmachung des Hinweises auf die Patenterteilung:
**21.05.2025 Patentblatt 2025/21**

(21) Anmeldenummer: **20792317.8**

(22) Anmeldetag: **07.10.2020**

(51) Internationale Patentklassifikation (IPC):
***G06N 3/10*** *(2006.01)*

(52) Gemeinsame Patentklassifikation (CPC):
**G06N 3/10**

(86) Internationale Anmeldenummer:
**PCT/EP2020/078047**

(87) Internationale Veröffentlichungsnummer:
**WO 2021/078512 (29.04.2021 Gazette 2021/17)**

(54) **VERFAHREN ZUM ROBUSTIFIZIEREN EINES NEURONALEN NETZES GEGEN ADVERSARIALE STÖRUNGEN**

METHOD FOR MAKING A NEURAL NETWORK MORE ROBUST AGAINST ADVERSARIAL DISRUPTIONS

PROCÉDÉ POUR ROBUSTIFIER UN RÉSEAU NEURONAL VIS-À-VIS DE PERTURBATIONS ANTAGONISTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2019 DE 102019216184**

(43) Veröffentlichungstag der Anmeldung:
**31.08.2022 Patentblatt 2022/35**

(73) Patentinhaber: VOLKSWAGEN AKTIENGESELLSCHAFT
38440 Wolfsburg (DE)

(72) Erfinder:
• **SCHLICHT, Peter**
  **38442 Wolfsburg (DE)**
• **HÜGER, Fabian**
  **38302 Wolfenbüttel (DE)**

(56) Entgegenhaltungen:
• **TEJAS BORKAR ET AL: "Defending against Adversarial Attacks through Resilient Feature Regeneration", ARXIV.ORG, CORNELL UNIVERSITY LIBRARY, 201 OLIN LIBRARY CORNELL UNIVERSITY ITHACA, NY 14853, 8 June 2019 (2019-06-08), XP081374812**
• **BOLOOR ADITH ET AL: "Simple Physical Adversarial Examples against End-to-End Autonomous Driving Models", 2019 IEEE INTERNATIONAL CONFERENCE ON EMBEDDED SOFTWARE AND SYSTEMS (ICESS), IEEE, 2 June 2019 (2019-06-02), pages 1 - 7, XP033587973, DOI: 10.1109/ICESS.2019.8782514**
• **SHAOSHAN LIU ET AL: "Implementing a Cloud Platform for Autonomous Driving", 10 April 2017 (2017-04-10), arXiv.org, XP055720595, Retrieved from the Internet <URL:https://arxiv.org/ftp/arxiv/papers/1704/1704.02696.pdf> [retrieved on 20200806]**

**Beschreibung**

Die Erfindung betrifft ein Verfahren zum Robustifizieren eines Neuronalen Netzes gegen adversariale Störungen und eine Vorrichtung zum Bereitstellen eines gegen adversariale Störungen robustifizierten Neuronalen Netzes. Ferner betrifft die Erfindung ein Computerprogramm und ein Datenträgersignal.

Maschinelles Lernen, beispielsweise auf Grundlage von Neuronalen Netzen, hat großes Potenzial für eine Anwendung in modernen Fahrerassistenzsystemen und automatisiert fahrenden Kraftfahrzeugen. Auf tiefen Neuronalen Netzen basierende Funktionen verarbeiten hierbei Sensordaten (zum Beispiel von Kameras, Radar- oder Lidarsensoren), um hieraus relevante Informationen abzuleiten. Diese Informationen umfassen zum Beispiel eine Art und eine Position von Objekten in einem Umfeld des Kraftfahrzeugs, ein Verhalten der Objekte oder eine Fahrbahngeometrie oder -topologie.

Unter den Neuronalen Netzen haben sich insbesondere Faltungsnetze (engl. Convolutional Neural Networks, CNN) als besonders geeignet für Anwendungen in der Bildverarbeitung erwiesen. Faltungsnetze extrahieren in unüberwachter Form stufenweise verschiedene hochwertige Merkmale aus Eingangsdaten (z.B. Bilddaten). Das Faltungsnetz entwickelt hierbei während einer Trainingsphase eigenständig Merkmalskarten basierend auf Filterkanälen, die die Eingangsdaten lokal verarbeiten, um hierdurch lokale Eigenschaften abzuleiten. Diese Merkmalskarten werden dann erneut von weiteren Filterkanälen verarbeitet, die daraus höherwertigere Merkmalskarten ableiten. Auf Grundlage dieser derart aus den Eingangsdaten verdichteten Informationen leitet das tiefe Neuronale Netz schließlich seine Entscheidung ab und stellt diese als Ausgangsdaten bereit.

Während Faltungsnetze klassische Ansätze an funktionaler Genauigkeit übertreffen, besitzen diese jedoch auch Nachteile. So können beispielsweise auf adversarialen Störungen in den Sensordaten/Eingangsdaten basierende Angriffe dazu führen, dass trotz eines semantisch nicht veränderten Inhalts in den erfassten Sensordaten eine Fehlklassifizierung bzw. eine falsche semantische Segmentierung erfolgt.

Aus der DE 10 2018 115 440 A1 sind Techniken zum Trainieren von tiefen neuronalen Netzwerken bekannt, beispielsweise solche mit einem iterativen Ansatz. Beschrieben ist ein Trainingssystem für ein tiefes neuronales Netzwerk (Deep Neural Network, DNN), das durch iteratives Trainieren von DNNs mit Bildern, die durch frühere Iterationen des DNN falsch klassifiziert wurden, ein gehärtetes DNN erzeugt. In einer oder mehreren Varianten kann die Logik beispielsweise ein feindliches Bild erzeugen, das von einem ersten DNN, das zuvor mit einem Satz von Musterbildern trainiert wurde, falsch klassifiziert wird. In einigen Varianten kann die Logik einen zweiten Trainingssatz bestimmen, der das feindliche Bild enthält, das von dem ersten DNN und dem ersten Trainingssatz von einem oder mehreren Musterbildern falsch klassifiziert wurde. Der zweite Trainingssatz kann verwendet werden, um ein zweites DNN zu trainieren. In verschiedenen Varianten kann der vorstehende Prozess für eine vorbestimmte Anzahl von Iterationen wiederholt werden, um ein gehärtetes DNN zu erzeugen.

Aus Tejas Borkar et al., Defending against Adversarial Attacks through Resilient Feature Regeneration, ARXIV.ORG, CORNELL UNIVERSITY LIBRARY, 201 OLIN LIBRARY CORNELL UNIVERSITY ITHACA, NY 14853, 8. Juni 2019, ist ein Verfahren zum Verteidigen eines Neuronalen Netzes gegen adversariale Störungen bekannt.

Aus Adith Boloor et al., Simple Physical Adversarial Examples against End-to-End Autonomous Driving Models, 2019 IEEE INTERNATIONAL CONFERENCE ON EMBEDDED SOFTWARE AND SYSTEMS (ICESS), IEEE, 2. Juni 2019, Seiten 1-7, DOI: 10.1109/ICESS.2019.8782514, sind Beispiele für physische Ausgestaltungen von adversarialen Störungen aus dem Bereich des autonomen Fahrens bekannt.

Der Erfindung liegt die Aufgabe zu Grunde, ein verbessertes Verfahren zum Robustifizieren eines Neuronalen Netzes gegen adversariale Störungen und eine verbesserte Vorrichtung zum Bereitstellen eines gegen adversariale Störungen robustifizierten Neuronalen Netzes zu schaffen.

Die Aufgabe wird erfindungsgemäß durch ein Verfahren mit den Merkmalen des Patentanspruchs 1 und eine Vorrichtung mit den Merkmalen des Patentanspruchs 11 gelöst. Vorteilhafte Ausgestaltungen der Erfindung ergeben sich aus den Unteransprüchen.

Insbesondere wird ein Verfahren zum Robustifizieren eines Neuronalen Netzes gegen adversariale Störungen zur Verfügung gestellt, wobei mittels mindestens einer Manipulatoreinrichtung während einer Anwendungsphase des Neuronalen Netzes Eingangsdaten mindestens einer Schicht des Neuronalen Netzes, bevor diese der mindestens einen Schicht zugeführt werden, zumindest teilweise derart verändert werden, dass die veränderten Eingangsdaten gemäß einem statistischen Modell statistisch wahrscheinlicher sind als die unveränderten Eingangsdaten der mindestens einen Schicht, wobei das statistische Modell jeweils statistische Eigenschaften von Eingangsdaten der mindestens einen Schicht für den Fall abbildet, dass dem Neuronalen Netz Trainingsdaten eines Trainingsdatensatzes zugeführt werden, mit dem das Neuronale Netz trainiert wurde.

Ferner wird insbesondere eine Vorrichtung zum Bereitstellen eines gegen adversariale Störungen robustifizierten Neuronalen Netzes geschaffen, umfassend eine Datenverarbeitungseinrichtung zum Bereitstellen des Neuronalen Netzes, und mindestens eine Manipulatoreinrichtung, wobei die mindestens eine Manipulatoreinrichtung dazu eingerichtet ist, während einer Anwendungsphase des Neuronalen Netzes Eingangsdaten mindestens einer Schicht des Neuronalen Netzes, bevor diese der mindestens einen Schicht zugeführt werden, zumindest teilweise derart zu verändern, dass die veränderten Eingangsdaten gemäß einem statistischen Modell statistisch wahrscheinlicher sind als die unveränderten Eingangsdaten der mindestens einen Schicht, wobei das statistische Modell jeweils statistische Eigenschaften von Eingangsdaten der mindestens einen Schicht für den Fall abbildet, dass dem Neuronalen Netz Trainingsdaten eines Trainingsdatensatzes zugeführt werden, mit dem das Neuronale Netz trainiert wurde.

Das Verfahren und die Erfindung ermöglichen es, ein Neuronales Netz robuster gegen adversariale Störungen zu machen. Dies erfolgt, indem während einer Anwendungsphase des Neuronalen Netzes, das heißt bei Anwenden des trainierten Neuronalen Netzes, Eingangsdaten von mindestens einer Schicht des Neuronalen Netzes derart verändert werden, dass die veränderten Eingangsdaten gemäß einem statistischen Modell statistisch wahrscheinlicher sind als die unveränderten Eingangsdaten der mindestens einen Schicht. Das statistische Modell bildet hierbei statistische Eigenschaften von Eingangsdaten der mindestens einen Schicht für den Fall ab, dass dem Neuronalen Netz Trainingsdaten eines Trainingsdatensatzes zugeführt werden, mit dem das Neuronale Netz trainiert wurde. Anders ausgedrückt wird versucht, auf Grundlage einer statistischen Verteilung von Eigenschaften in den Eingangsdaten der mindestens einen Schicht, wie diese beim Zuführen von Trainingsdaten des Trainingsdatensatzes vorliegen, in der Anwendungsphase, das heißt wenn dem Neuronalen Netz reale Daten zugeführt werden, Eingangsdaten der mindestens einen Schicht derart zu verändern, dass diese der statistischen Verteilung ähnlicher sind. Hierdurch kann erreicht werden, dass adversariale Störungen in den realen Daten ihre Wirkung verlieren, das heißt dass die Eingangsdaten der mindestens einen Schicht von den adversarialen Störungen bereinigt werden.

Ein Vorteil des Verfahrens und der Vorrichtung ist, dass das Neuronale Netz unabhängig von der konkreten adversarialen Störung robuster gemacht werden kann. Ein weiterer Vorteil ist, dass die Manipulatoreinrichtung und das Neuronale Netz voneinander unabhängig sind und daher auch unabhängig voneinander weiterentwickelt werden können. Insbesondere kann das statistische Modell geändert, insbesondere verfeinert und verbessert werden, ohne dass das Neuronale Netz selbst verändert werden muss.

Das Verfahren wird als computerimplementiertes Verfahren ausgeführt.

Insbesondere wird das Verfahren mittels einer Datenverarbeitungseinrichtung ausgeführt. Die Datenverarbeitungseinrichtung umfasst insbesondere mindestens eine Recheneinrichtung und mindestens eine Speichereinrichtung. Die Datenverarbeitungseinrichtung stellt insbesondere das Neuronale Netz und die mindestens eine Manipulatoreinrichtung bereit.

Es wird insbesondere auch ein Computerprogramm geschaffen, umfassend Befehle, die bei der Ausführung des Computerprogramms durch einen Computer diesen veranlassen, die Verfahrensschritte des erfindungsgemäßen Verfahrens auszuführen.

Darüber hinaus wird insbesondere auch ein Datenträgersignal geschaffen, umfassend Befehle, die bei der Ausführung durch einen Computer diesen veranlassen, die Verfahrensschritte des erfindungsgemäßen Verfahrens auszuführen.

Eine adversariale Störung (engl. adversarial perturbation) ist insbesondere eine gezielt vorgenommene Störung der Eingangsdaten eines Neuronalen Netzes, bei der ein semantischer Inhalt in den Eingangsdaten zwar nicht verändert wird, die Störung jedoch dazu führt, dass das Neuronale Netz ein falsches Ergebnis inferiert, das heißt beispielsweise eine Fehlklassifikation oder eine falsche semantische Segmentierung der Eingangsdaten vornimmt.

Ein Neuronales Netz ist insbesondere ein tiefes Neuronales Netz, insbesondere ein Faltungsnetz (engl. Convolutional Neural Network, CNN). Das Neuronale Netz wird oder ist beispielsweise auf eine bestimmte Wahrnehmungsfunktion trainiert, beispielsweise auf eine Wahrnehmung von Fußgängern oder anderen Objekten in erfassten Kamerabildern. Die Erfindung ist insbesondere unabhängig von der konkreten Ausgestaltung des Neuronalen Netzes, sondern betrifft nur die Eingangsdaten des Neuronalen Netzes bzw. die Eingangsdaten von Schichten des Neuronalen Netzes.

Die Eingangsdaten des Neuronalen Netzes und der einzelnen Schichten können eindimensional oder mehrdimensional sein. Insbesondere handelt es sich bei den Eingangsdaten des Neuronalen Netzes um zweidimensionale Daten, beispielsweise um mittels einer Kamera erfasste Bilddaten. Als Ausgangsdaten liefert das Neuronale Netz insbesondere ein inferiertes Ergebnis, das insbesondere als Ausgangsdatensignal bereitgestellt wird, beispielsweise in Form eines digitalen Datenpakets.

Eine Schicht des Neuronalen Netzes kann sowohl eine Eingangsschicht des Neuronalen Netzes als auch eine innere Schicht des Neuronalen Netzes sein. Eine Schicht kann insbesondere auch eine Ausgangsschicht des Neuronalen Netzes sein, wobei die Ausgangsschicht insbesondere lediglich einem Weiterleiten von Eingangsdaten der Ausgangschicht dient, ohne dass diese durch die Ausgangsschicht noch verändert oder bearbeitet werden.

Das statistische Modell bildet insbesondere statistische Eigenschaften von Eingangsdaten in Abhängigkeit von gegebenen Trainingsdaten ab. Werden mehrere Schichten betrachtet bzw. deren Eingangsdaten verändert, so umfasst das statistische Modell insbesondere ein eigenes statistisches Modell für die Eingangsdaten jeder dieser Schichten. Ferner kann das statistische Modell weitere Untermodelle für Eingangsdaten von Elementen oder Gruppen von Elementen innerhalb von Schichten umfassen.

In einer Ausführungsform ist vorgesehen, dass die mindestens eine Schicht eine Eingangsschicht des Neuronalen Netzes umfasst, wobei das statistische Modell zugehörig zur Eingangsschicht statistische Eigenschaften der Trainingsdaten des Trainingsdatensatzes abbildet. Die Trainingsdaten umfassen hierbei insbesondere Sensordaten einer Sensorik. Die Sensordaten werden hierbei als statistische Prozesse aufgefasst, wobei Werten in den Sensordaten eine Wahrscheinlichkeit für das Auftreten dieser Werte zugeordnet werden kann. Für die Trainingsdaten können dann für verschiedene Eigenschaften statistische Verteilungen modelliert werden, mit denen sich die Eigenschaften der Trainingsdaten statistisch beschreiben lassen. Handelt es sich bei den Eingangsdaten des Neuronalen Netzes, das heißt bei den Eingangsdaten, die der Eingangsschicht des Neuronalen Netzes zugeführt werden, beispielsweise um Kamerabilder, so können die Eigenschaften beispielsweise konkrete Werte von Bildelementen (Pixel) der Kameradaten oder höherwertige Merkmale, wie z.B. Ortsfrequenzen, Kantenverteilungen und/oder Merkmalskarten durch gelernte Filter, in ihrer örtlichen Verteilung sein. Für diese Eigenschaften wird das statistische Modell dann entsprechend angepasst (gefittet), sodass das statistische Modell anschließend die statistischen Verteilungen dieser Eigenschaften modelliert und abbildet. Die einzelnen Eigenschaften, das heißt die einzelnen Merkmale, sind hierbei statistisch in der Regel nicht unabhängig voneinander, sondern bedingen sich gegenseitig. Die statistischen Abhängigkeiten können beispielsweise ebenfalls in den statistischen Verteilungen berücksichtigt werden. Ein Kamerabild kann beispielsweise als Markov Random Field modelliert werden. Werden der Eingangsschicht des Neuronalen Netzes in einer Anwendungsphase dann Eingangsdaten zugeführt, im genannten Beispiel erfasste Kamerabilder, so werden die Eingangsdaten derart verändert, dass die geänderten Eingangsdaten, insbesondere in Bezug auf Ausprägungen der jeweiligen Eigenschaften, gemäß der jeweiligen statistischen Verteilung in dem statistischen Modell wahrscheinlicher sind als die unveränderten Eingangsdaten.

In einer Ausführungsform ist vorgesehen, dass die mindestens eine Schicht mindestens eine innere Schicht des Neuronalen Netzes umfasst, wobei zugehörige Eingangsdaten der mindestens einen inneren Schicht Aktivierungen einer jeweils voranstehenden Schicht des Neuronalen Netzes sind, und wobei zum Verändern der Eingangsdaten der mindestens einen inneren Schicht die Aktivierungen der jeweils voranstehenden Schicht zumindest teilweise verändert werden, wobei das statistische Modell zugehörig zur mindestens einen inneren Schicht statistische Eigenschaften der Aktivierungen der jeweils voranstehenden Schicht für den Fall abbildet, dass dem Neuronalen Netz die Trainingsdaten des Trainingsdatensatzes zugeführt werden, mit dem das Neuronale Netz trainiert wurde. Hierdurch können Eingangsdaten von inneren Schichten des Neuronalen Netzes gemäß dem statistischen Modell verändert werden. Das statistische Modell umfasst hierzu für gegebene Trainingsdaten des Neuronalen Netzes insbesondere statistische Verteilungen von Eigenschaften der Aktivierungen einer Schicht, die einer betrachteten inneren Schicht vorangeht. Durch das Verändern der Eingangsdaten der mindestens einen inneren Schicht bzw. der Aktivierungen einer zugehörigen vorangegangenen Schicht kann eine Wirkung von adversarialen Störungen verringert oder sogar vollständig ausgeschaltet werden. Die Aktivierungen werden hierzu derart verändert, dass die geänderten Aktivierungen gemäß den in dem statistischen Modell enthaltenen statistischen Verteilungen wahrscheinlicher sind.

Insbesondere kann vorgesehen sein, dass das Verfahren sowohl auf Eingangsdaten des Neuronalen Netzes, das heißt auf Eingangsdaten einer Eingangsschicht des Neuronalen Netzes, als auch auf Eingangsdaten mindestens einer inneren Schicht des Neuronalen Netzes bzw. auf Aktivierungen einer jeweils zugehörigen vorangegangenen Schicht angewendet wird. Hierdurch kann eine Bereinigung von adversarialen Störungen sowohl vor dem Neuronalen Netz als auch im Neuronalen Netz selbst erfolgen. Das Robustifizieren kann hierdurch weiter verbessert werden.

In einer Ausführungsform ist vorgesehen, dass das statistische Modell während oder nach einer Trainingsphase des Neuronalen Netzes ausgehend von dem Trainingsdatensatz mittels eines Backendservers erzeugt und der mindestens einen Manipulatoreinrichtung bereitgestellt wird. Hierdurch kann ein Einsatz des Verfahrens im Feld, beispielsweise in einem Kraftfahrzeug, erfolgen, das Erstellen bzw. Anpassen des statistischen Modells kann hingegen auf einem leistungsstarken Backendserver mit einem großen Trainingsdatensatz durchgeführt werden. Das angepasste statistische Modell wird dann der mindestens einen Manipulatoreinrichtung zugeführt. Ferner ist es möglich, nach einem erstmaligen Anpassen des statistischen Modells das statistische Modell auf dem Backendserver weiter zu verbessern und zu verfeinern (z.B. durch Aufnahme von statistischen Verteilungen für weitere Eigenschaften), unabhängig von dessen Einsatz im Feld. Ein verbessertes statistisches Modell wird dann erneut der mindestens einen Manipulatoreinrichtung zugeführt, welche eine vorangegangene Version des statistischen Modells durch das verbesserte Modell ersetzt. Hierdurch kann eine kontinuierliche Verbesserung und/oder Verfeinerung des statistischen Modells ermöglicht werden.

In einer Weiterbildung ist vorgesehen, dass eine Grundwahrheit der Trainingsdaten beim Erzeugen des statistischen Modells berücksichtigt wird. Hierdurch kann die Grundwahrheit der Trainingsdaten ebenfalls in dem statistischen Modell abgebildet werden. Dies ermöglicht insbesondere auch ein Verändern der Eingangsdaten einer Ausgangsschicht des Neuronalen Netzes. Dies kann beispielsweise zur Detektion von vermutlich adversarialen Situationen verwendet werden, wobei nur bei sehr hoher Konfidenz die Anpassung der Eingangsdaten der Ausgangsschicht als korrekt angenommen würde und weiterverarbeitet würde. Nach Detektieren einer adversarialen Situation kann dann beispielsweise eine defensivere Fahrstrategie oder ein Zurückgreifen auf redundant vorhandene Informationen bevorzugt werden.

In einer Ausführungsform ist vorgesehen, dass das statistische Modell während der Anwendungsphase in Abhängigkeit eines aktuellen Kontextes der Eingangsdaten des Neuronalen Netzes ausgewählt wird. Hierdurch kann das statistische Modell kontextabhängig bzw. situationsabhängig bereitgestellt werden. Handelt es sich bei den Eingangsdaten des Neuronalen Netzes beispielsweise um erfasste Kamerabilder eines Umfelds, in denen das Neuronale Netz Objekte erkennen soll, so kann ein statistisches Modell beispielsweise in Abhängigkeit einer Jahreszeit (Sommer, Winter) und/oder einer Tageszeit (Tag/Nacht) der erfassten Kamerabilder etc. ausgewählt und bereitgestellt werden. Für jeden Kontext wird dann ein spezialisiertes statistisches Modell bereitgestellt. Hierdurch kann das statistische Modell eine statistische Verteilung von Eigenschaften der Eingangsdaten verbessern, nämlich kontextabhängig, abbilden. Das Robustifizieren des Neuronalen Netzes ist hierdurch weiter verbessert.

In einer Ausführungsform ist vorgesehen, dass eine Stärke des Veränderns der Eingangsdaten mittels mindestens eines Anpassungsparameters vorgegeben wird. Hierdurch kann eine Stärke des Veränderns gezielt eingestellt werden. Insbesondere kann hierdurch eine Stärke des Veränderns beschränkt werden, sodass ein in den Eingangsdaten vorhandener semantischer Inhalt durch das Verändern nicht beeinträchtigt wird.

In einer weiterbildenden Ausführungsform ist vorgesehen, dass der mindestens eine Anpassungsparameter einen Schwellenwert für ein aus den unveränderten Eingangsdaten und zugehörigen veränderten Eingangsdaten bestimmtes Abstandsmaß vorgibt. Handelt es sich bei den Eingangsdaten beispielsweise um Kamerabilder, so kann ein euklidischer Abstand zwischen den Kamerabildern definiert werden. Der euklidische Abstand ergibt sich hierbei insbesondere aus den als Vektoren aufgefassten Kamerabildern, indem die Wurzel aus der Summe der quadratischen Bildelementdifferenzen der beiden Kamerabilder gebildet wird. Ein Verändern erfolgt dann beispielsweise dadurch, dass Werte für einzelne Bildelemente derart ersetzt werden, dass ein geändertes Bildelement gemäß dem statistischen Modell wahrscheinlicher ist, ein bestimmtes Abstandsmaß jedoch kleiner als der vorgegebene Anpassungsparameter ist.

In einer Ausführungsform ist vorgesehen, dass der mindestens eine Anpassungsparameter in Abhängigkeit der mindestens einen Schicht und/oder eines Elementes der mindestens einen Schicht vorgegeben wird oder vorgegeben ist. Hierdurch können für einzelne Elemente (z.B. für einzelne Neuronen oder einzelne Filterkerne) von Schichten und/oder für einzelne Schichten jeweils individuelle Anpassungsparameter vorgegeben werden. Dies verbessert weiter das Robustifizieren des Neuronalen Netzes, da eine Stärke des Veränderns für verschiedene Bereiche des Neuronalen Netzes einzeln festgelegt werden kann und hierdurch strukturelle Eigenschaften und Besonderheiten des Neuronalen Netzes, die oft eine starke Wirkung von adversarialen Störungen bedingen, berücksichtigt werden können.

In einer Ausführungsform ist vorgesehen, dass das Neuronale Netz eine Funktion für das automatisierte Fahren eines Fahrzeugs und/oder für eine Fahrerassistenz des Fahrzeugs und/oder für eine Umfelderfassung bereitstellt. Ein Fahrzeug ist insbesondere ein Kraftfahrzeug. Prinzipiell kann das Fahrzeug jedoch auch ein anderes Land-, Luft-, Wasser-, Schienen- oder Raumfahrzeug sein.

Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Weiter wird insbesondere auch ein Kraftfahrzeug geschaffen, umfassend mindestens eine Vorrichtung nach einer der beschriebenen Ausführungsformen.

Nachfolgend wird die Erfindung anhand bevorzugter Ausführungsbeispiele unter Bezugnahme auf die Figuren näher erläutert. Hierbei zeigen:

Fig. 1 eine schematische Darstellung einer Ausführungsform der Vorrichtung zum Robustifizieren eines Neuronalen Netzes gegen adversariale Störungen;

Fig. 2 eine schematische Darstellung eines Flussdiagramms zur Verdeutlichung einer Ausführungsform des Verfahrens zum Robustifizieren eines Neuronalen Netzes gegen adversariale Störungen;

Fig. 3 eine schematische Darstellung eines Flussdiagramms zur Verdeutlichung des Anpassens des statistischen Modells für die in Fig. 2 gezeigte Ausführungsform des Verfahrens;

Fig. 4 eine schematische Darstellung eines Flussdiagramms zur Verdeutlichung einer weiteren Ausführungsform des Verfahrens zum Robustifizieren eines Neuronalen Netzes gegen adversariale Störungen;

Fig. 5 eine schematische Darstellung eines Flussdiagramms zur Verdeutlichung des Anpassens des statistischen Modells für die in Fig. 4 gezeigte weitere Ausführungsform des Verfahrens.

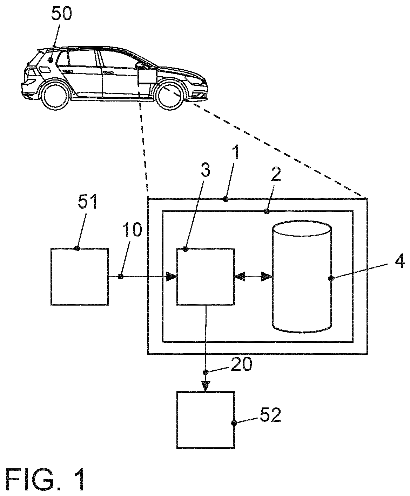

In Fig. 1 eine schematische Darstellung einer Ausführungsform der Vorrichtung 1 zum Bereitstellen eines gegen adversariale Störungen robustifizierten Neuronalen Netzes gezeigt. Die Vorrichtung 1 ist in einem Kraftfahrzeug 50 angeordnet und dient beispielsweise dem Bereitstellen einer Funktion für das automatisierte Fahren des Kraftfahrzeugs 50 und/oder für eine Fahrerassistenz des Kraftfahrzeugs 50 und/oder für eine Umfelderfassung bzw. Umfelderkennung.

Die Vorrichtung 1 umfasst eine Datenverarbeitungseinrichtung 2. Die Datenverarbeitungseinrichtung 2 umfasst eine Recheneinrichtung 3, beispielsweise einen Mikroprozessor, und eine Speichereinrichtung 4, auf die die Recheneinrichtung 3 zugreifen kann. Die Datenverarbeitungseinrichtung 2 stellt das Neuronale Netz, insbesondere in Form eines tiefen Neuronalen Netzes bzw. Faltungsnetzes (CNN), und eine Manipulatoreinrichtung in Form eines zusätzliches Programmmoduls bereit. Die Recheneinrichtung 3 führt zum Bereitstellen Befehle aus, die in der Speichereinrichtung 4 gespeichert sind.

Der Vorrichtung 1 werden Sensordaten 10 eines Sensors 51 des Kraftfahrzeugs 50, beispielsweise Kamerabilder einer Kamera, zugeführt. Das Neuronale Netz führt auf den Sensordaten 10 beispielsweise eine Objekterkennung und/oder eine semantische Segmentierung durch. Ein von dem Neuronalen Netz inferiertes Ergebnis 20 wird anschließend beispielsweise einer Planungseinrichtung 52 des Kraftfahrzeugs 50 zugeführt, die ausgehend hiervon eine Plantrajektorie für das Kraftfahrzeug 50 erzeugt.

Um das Neuronale Netz gegenüber adversarialen Störungen zu robustifizieren, ist die mindestens eine Manipulatoreinrichtung dazu eingerichtet, während einer Anwendungsphase des Neuronalen Netzes Eingangsdaten mindestens einer Schicht des Neuronalen Netzes, bevor diese der mindestens einen Schicht zugeführt werden, zumindest teilweise derart zu verändern, dass die veränderten Eingangsdaten gemäß einem statistischen Modell statistisch wahrscheinlicher sind als die unveränderten Eingangsdaten der mindestens einen Schicht. Das statistische Modell bildet hierzu jeweils statistische Eigenschaften von Eingangsdaten der mindestens einen Schicht für den Fall ab, dass dem Neuronalen Netz Trainingsdaten eines Trainingsdatensatzes zugeführt werden, mit dem das Neuronale Netz trainiert wurde.

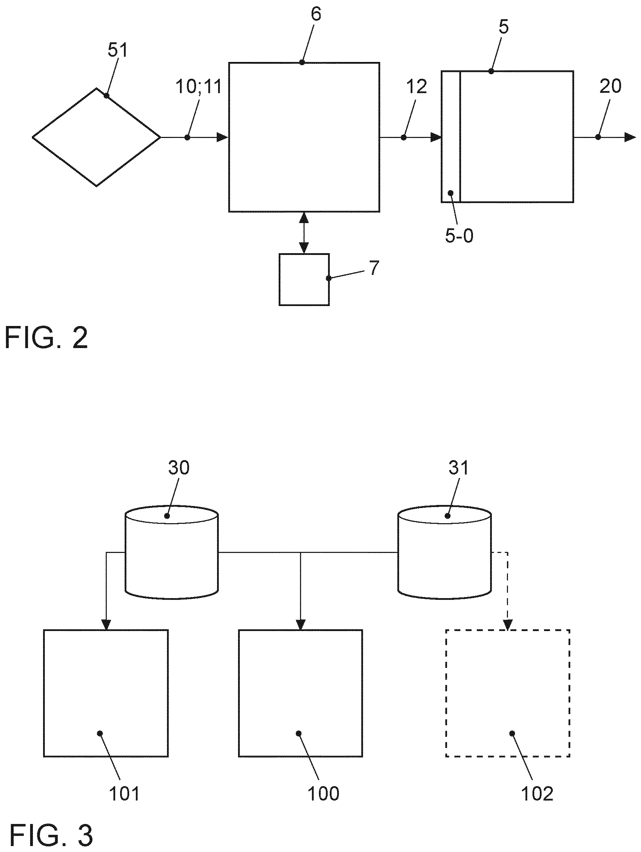

In Fig. 2 ist eine schematische Darstellung eines Flussdiagramms zur Verdeutlichung einer Ausführungsform des Verfahrens zum Robustifizieren eines Neuronalen Netzes 5 gegen adversariale Störungen gezeigt. Die Ausführungsform zeigt hierbei beispielhaft das Verändern von Eingangsdaten 11 einer Eingangsschicht 5-0 des Neuronalen Netzes 5. Anders ausgedrückt, werden von einem Sensor 51 erfasste Sensordaten 10 (Eingangsdaten 11) verändert, bevor diese der Eingangsschicht 5-0 des Neuronalen Netzes 5 zugeführt werden.

Das Verändern erfolgt mittels einer Manipulatoreinrichtung 6. Der Manipulatoreinrichtung 6 wird ein statistisches Modell 8 bereitgestellt, das statistische Eigenschaften von Trainingsdaten eines Trainingsdatensatzes abbildet, mit dem das Neuronale Netz 5 trainiert wurde.

Mittels der Manipulatoreinrichtung 6 werden während einer Anwendungsphase des Neuronalen Netzes 5 die Eingangsdaten 11 zumindest teilweise derart verändert, dass veränderte Eingangsdaten 12 gemäß dem statistischen Modell 7 statistisch wahrscheinlicher sind als die unveränderten Eingangsdaten 11.

Bezeichnet x beispielsweise ein Datum in den Eingangsdaten 11 und x' ein verändertes Datum in den veränderten Eingangsdaten 12, so erfolgt das Verändern beispielsweise durch die folgenden Maßnahmen:
Ersetze x durch x', sodass

    1. $P(x')$ = maximal und
    2. $d(x,x') < \varepsilon$

wobei $P(x')$ eine auf Grundlage des statistischen Modells abgeleitete Wahrscheinlichkeit für das Auftreten des Datums x' bezeichnet, $d(x,x')$ ein Abstandsmaß zwischen den Daten x und x' ist und $\varepsilon$ ein Anpassungsparameter ist. Der Anpassungsparameter $\varepsilon$ wird beispielsweise auf Grundlage von empirischen Testdurchläufen mit Testdaten ("in" und "out of sample") unter Berücksichtigung von adversarialen Störungen bestimmt und vorgegeben.

Die Manipulatoreinrichtung 6 ersetzt die Daten x beispielsweise jeweils stückweise mittels Greedy-Algorithmen (z.B. "ersetze einzelne Eingangsdatenwerte, beispielsweise Bildelementwerte, möglichst optimal bis ein Budget an erlaubten Manipulationen ausgeschöpft ist"), Divide-and-Conquer-Algorithmen (z.B. "teile die Eingangsdaten in Teilmengen auf und manipuliere diese Teilmengen mit einem entsprechend angepassten Manipulationsbudget") und/oder gradientenbasierten Algorithmen (z.B. "berechne die Ableitung von $P(x)$ und verändere die Eingangsdaten in Richtung des entstehenden Gradienten"). Der Anpassungsparameter $\varepsilon$ stellt hierbei einen heuristischen Hyperparameter dar, der insbesondere derart gewählt ist, dass das Verändern subsymbolisch bleibt und keine relevante semantische Änderung zur Folge hat.

Die veränderten Eingangsdaten 12 werden anschließend der Eingangsschicht 5-0 des Neuronalen Netzes 5 zugeführt.

In Fig. 3 ist eine schematische Darstellung eines Flussdiagramms zur Verdeutlichung des Anpassens bzw. Bestimmen des statistischen Modells für die in der Fig. 2 gezeigte Ausführungsform des Verfahrens gezeigt. Das Anpassen erfolgt insbesondere auf einem Backendserver bzw. mittels eines Backendservers.

Das Neuronale Netz wird in einem Verfahrensschritt 100 mittels Trainingsdaten 30 und einer den Trainingsdaten 30 jeweils zugeordneten Grundwahrheit 31 trainiert. Beispielsweise kann das Neuronale Netz durch überwachtes Lernen darauf trainiert werden, an Kamerabildern eine semantische Segmentierung vorzunehmen.

Anschließend erfolgt das Anpassen des statistischen Modells 7 ausgehend von den Trainingsdaten 30.

Hierzu werden statistische Verteilungen von Eigenschaften der Trainingsdaten 30 bestimmt. Die Eigenschaften können hierbei sowohl eine Rohinformation der Trainingsdaten 30 betreffen, z.B. Pixelwerte in zum Trainieren verwendeten Kamerabildern, als auch höherwertige Merkmale (z.B. Ortsfrequenzen, Kantenverteilungen etc.). Die Menge an bestimmten statistischen Verteilungen bildet hierbei das an die Trainingsdaten 30 angepasste bzw. gefittete statistische Modell. Nach dem Anpassen (fitten) des statistischen Modells 7 wird dieses der Manipulatoreinrichtung 6 (Fig. 2) zugeführt.

Das Anpassen (Fitten) eines Datums bezeichnet hierbei insbesondere das Bestimmen einer Wahrscheinlichkeit für das Auftreten des Datums in dem Trainingsdatensatz 30:

$x \rightarrow P(x)$

Es kann zusätzlich vorgesehen sein, dass eine Grundwahrheit 31 der Trainingsdaten 30 beim Erzeugen des statistischen Modells berücksichtigt wird. Hierzu wird das statistische Modell in einem Verfahrensschritt 102 auch auf Grundlage der Grundwahrheit 31 angepasst. Dies ermöglicht es insbesondere, auch Eingangsdaten einer Ausgangsschicht des Neuronalen Netzes zu verändern.

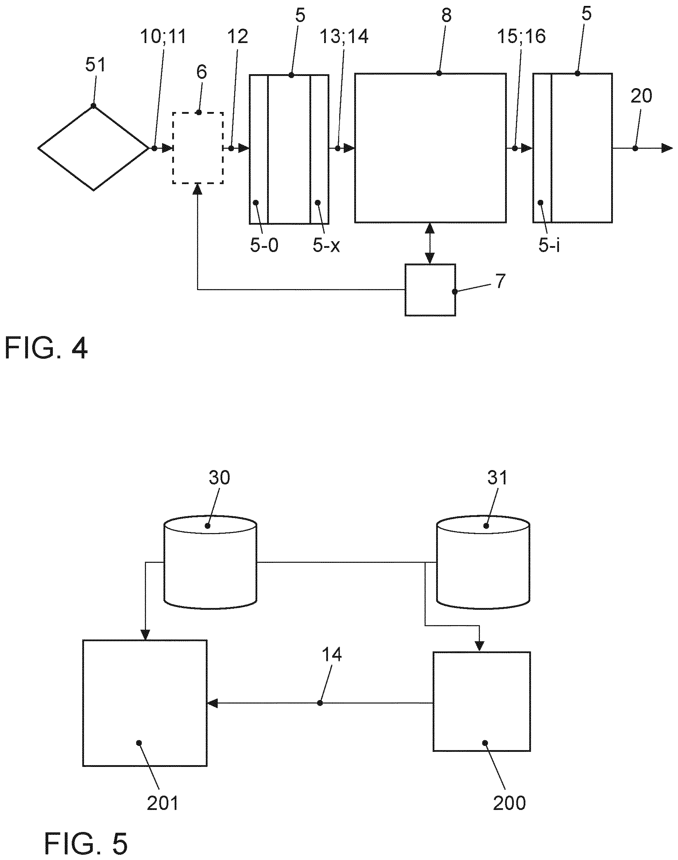

In Fig. 4 ist eine schematische Darstellung eines Flussdiagramms zur Verdeutlichung einer weiteren Ausführungsform des Verfahrens zum Robustifizieren eines Neuronalen Netzes 5 gegen adversariale Störungen gezeigt. Die Ausführungsform zeigt hierbei beispielhaft das Verändern von Eingangsdaten 13 einer inneren Schicht 5-i des Neuronalen Netzes 5. Anders ausgedrückt werden von einer Schicht 5-x des Neuronalen Netzes 5 inferierte Aktivierungen 14 verändert, bevor diese der inneren Schicht 5-i des Neuronalen Netzes 5 zugeführt werden.

Das Verändern erfolgt mittels einer weiteren Manipulatoreinrichtung 8. Die weitere Manipulatoreinrichtung 8 verändert hierzu einen Datenfluss innerhalb des Neuronalen Netzes 5. Der weiteren Manipulatoreinrichtung 8 wird ein statistisches Modell 7 bereitgestellt, wobei das statistische Modell 7 zugehörig zur inneren Schicht 5-i statistische Eigenschaften der Aktivierungen 14 der voranstehenden Schicht 5-x für den Fall abbildet, dass dem Neuronalen Netz 5 die Trainingsdaten des Trainingsdatensatzes zugeführt werden, mit dem das Neuronale Netz 5 trainiert wurde.

Mittels der weiteren Manipulatoreinrichtung 8 werden während einer Anwendungsphase des Neuronalen Netzes 5 die Eingangsdaten 13, das heißt die Aktivierungen 14, zumindest teilweise derart verändert, dass veränderte Eingangsdaten 15, das heißt veränderte Aktivierungen 16, gemäß dem statistischen Modell 7 statistisch wahrscheinlicher sind als die unveränderten Eingangsdaten 13 bzw. die unveränderten Aktivierungen 14.

Zusätzlich ist in dieser Ausführungsform vorgesehen, dass die Eingangsdaten 11 der Eingangsschicht 5-0 des Neuronalen Netzes 5 - wie bereits mit Bezug auf die Fig. 2 beschrieben - verändert werden.

Bezeichnet x beispielsweise ein Datum in den Eingangsdaten 11 der Eingangsschicht 5-0, x' ein verändertes Datum, a(x') die Aktivierung gegeben das veränderte Datum x' der Eingangsschicht und a' die veränderte Aktivierung, so erfolgt das Verändern beispielsweise durch die folgenden Maßnahmen:
Ersetze a(x') durch a', sodass

1. $P(a', x') = $ maximal <u>und</u>
2. $d(a(x'),a') < \varepsilon$

wobei $P(a', x')$ eine Wahrscheinlichkeit für das Auftreten von a' gegeben das (veränderte) Datum x' bezeichnet, $d(a(x'),a')$ ein Abstandsmaß zwischen den Daten a und a' und $\varepsilon$ ein Anpassungsparameter ist.

Die weitere Manipulationseinrichtung 8 ersetzt die Aktivierungen a beispielsweise jeweils stückweise mittels Greedy-Algorithmen, Divide-and-Conquer-Algorithmen und/oder gradientenbasierten Algorithmen (siehe oben). Der Anpassungsparameter $\varepsilon$ stellt einen heuristischen Hyperparameter dar, und wird beispielsweise empirisch auf Grundlage von Testläufen mit Hilfe von Testdaten ("in" und "out of sample") und zur Feinjustierung des Anpassungsparameters $\varepsilon$ mit in den Testdaten erhaltenen adversarialen Störungen bestimmt.

Die derart veränderten Eingangsdaten 15 bzw. veränderten Aktivierungen 16 werden anschließend der inneren Schicht 5-i des Neuronalen Netzes 5 zugeführt.

In Fig. 5 ist eine schematische Darstellung eines Flussdiagramms zur Verdeutlichung des Anpassens des statistischen Modells für die in der Fig. 4 gezeigte Ausführungsform des Verfahrens gezeigt. Das Anpassen erfolgt beispielsweise auf dem Backendserver bzw. mittels des Backendservers. Gezeigt ist das Anpassen des statistischen Modells 7 mit Bezug auf Aktivierungen 13 der Schicht 5-x (Fig. 4). Das Anpassen des statistischen Modells 7 mit Bezug auf die Eingangsdaten 11 der Eingangsschicht 5-0 wurde bereits in Fig. 3 beispielhaft verdeutlicht.

Das Neuronale Netz wird in einem Verfahrensschritt 200 vielfach auf Trainingsdaten 30 angewendet. Nach jedem Anwenden werden für die Trainingsdaten 30 jeweils Aktivierungen 14 der Schicht 5-x (Fig. 4) extrahiert.

Die Aktivierungen 14 werden in einem Verfahrensschritt 201 statistisch ausgewertet. Hierzu wird das statistische Modell an eine Verteilung der Aktivierungen 14 in Bezug zu den jeweils beim Anwenden verwendeten Trainingsdaten 30 angepasst (gefittet). Anders ausgedrückt werden statistische Verteilungen in den Eigenschaften der Aktivierungen 14 in Bezug zu den beim jeweiligen Anwenden des Neuronalen Netzes verwendeten Trainingsdaten 30 bestimmt. Die Eigenschaften umfassen insbesondere sowohl Rohinformationen in den Aktivierungen 14 (beispielsweise in den von einzelnen Filtern in der Schicht 5-x gelieferten Merkmalskarten) als auch höherwertige Merkmale (z.B. Ortsfrequenzen, Kantenverteilungen in den Merkmalskarten von einzelnen Filtern in der Schicht 5-x etc.).

Die Menge an bestimmten statistischen Verteilungen bildet hierbei das angepasste statistische Modell 7 bzw. zumindest den Teil hiervon, der die Aktivierungen 14 der Schicht 5-x betrifft. Das angepasste statistische Modell 7 wird dann der weiteren Manipulatoreinrichtung 8 (Fig. 4) zugeführt. Das statistische Modell 7 umfasst dann insbesondere sowohl die statistischen Verteilungen für die Eingangsdaten 11 der Eingangsschicht 5-0 als auch die statistischen Verteilungen der Aktivierungen 14 der Schicht 5-x.

Das Anpassen (Fitten) einer Aktivierung a(x) zum Datum x bezeichnet hierbei insbesondere das Bestimmen einer Wahrscheinlichkeit für das Auftreten der Aktivierung a(x) gegeben das Datum x in dem Trainingsdatensatz 30:

$$(x,a(x)) \rightarrow P(x,(a,x)) = P(a(x)|x)$$

Die beispielhaften Ausführungsformen sehen nur ein Verändern der Eingangsdaten 11 der Eingangsschicht 5-0 bzw. der Eingangsdaten 13 einer einzigen inneren Schicht 5-i des Neuronalen Netzes 5 vor (vgl. Fig. 2 und Fig. 4). Prinzipiell ist es jedoch möglich, weitere innere Schichten oder nur eine oder mehrere innere Schichten zu berücksichtigen. Das Vorgehen ist hierbei grundsätzlich analog, wobei das statistische Modell dann stets auch statistische Verteilungen für Eigenschaften von Eingangsdaten der jeweiligen Schichten mit umfasst und bereitstellt.

## Bezugszeichenliste

| | |
|---|---|
| 1 | Vorrichtung |
| 2 | Datenverarbeitungseinrichtung |
| 3 | Recheneinrichtung |
| 4 | Speichereinrichtung |
| 5 | Neuronales Netz |
| 5-0 | Eingangsschicht |
| 5-x | Schicht |
| 5-i | innere Schicht |
| 6 | Manipulatoreinrichtung |
| 7 | statistisches Modell |
| 8 | weitere Manipulatoreinrichtung |
| 10 | Sensordaten |
| 11 | Eingangsdaten (des Neuronalen Netzes) |
| 12 | veränderte Eingangsdaten |
| 13 | Eingangsdaten (der inneren Schicht) |
| 14 | Aktivierungen (der Schicht 5-x) |
| 15 | veränderte Eingangsdaten |
| 16 | veränderte Aktivierungen |
| 20 | inferiertes Ergebnis |
| 30 | Trainingsdaten |
| 31 | Grundwahrheit |
| 50 | Kraftfahrzeug |
| 51 | Sensor |
| 100-102 | Verfahrensschritte |
| ε | Anpassungsparameter |

## Patentansprüche

1. Computerimplementiertes Verfahren zum Robustifizieren eines Neuronalen Netzes (5) gegen adversariale Störungen, wobei dem Neuronalen Netz (5) Sensordaten (10) eines Sensors (51) eines Kraftfahrzeugs (50) zugeführt werden,

   wobei mittels mindestens einer Manipulatoreinrichtung (6,8) während einer Anwendungsphase des Neuronalen Netzes (5) Eingangsdaten (11,13) mindestens einer Schicht (5-0,5-x,5-i) des Neuronalen Netzes (5), bevor diese der mindestens einen Schicht (5-0,5-x,5-i) zugeführt werden, zumindest teilweise derart verändert werden, dass die veränderten Eingangsdaten (12,15) gemäß einem der mindestens einen Manipulatoreinrichtung (6,8) bereitgestellten statistischen Modell (7) statistisch wahrscheinlicher sind als die unveränderten Eingangsdaten (11,13) der mindestens einen Schicht (5-0,5-x,5-i),
   wobei das statistische Modell (7) jeweils statistische Eigenschaften von Eingangsdaten (11,13) der mindestens einen Schicht (5-0,5-x,5-i) für den Fall abbildet, dass dem Neuronalen Netz (5) Trainingsdaten (30) eines Trainingsdatensatzes zugeführt werden, mit dem das Neuronale Netz (5) trainiert wurde.

2. Verfahren nach Anspruch 1, **dadurch gekennzeichnet, dass** die mindestens eine Schicht (5-0,5-x,5-i) eine Eingangsschicht (5-0) des Neuronalen Netzes (5) umfasst, wobei das statistische Modell (7) zugehörig zur Eingangsschicht (5-0) statistische Eigenschaften der Trainingsdaten (30) des Trainingsdatensatzes abbildet.

3. Verfahren nach Anspruch 1 oder 2, **dadurch gekennzeichnet, dass** die mindestens eine Schicht (5-0,5-x,5-i) mindestens eine innere Schicht (5-i) des Neuronalen Netzes (5) umfasst, wobei zugehörige Eingangsdaten (13) der mindestens einen inneren Schicht (5-i) Aktivierungen (14) einer jeweils voranstehenden Schicht (5-x) des Neuronalen Netzes (5) sind, und wobei zum Verändern der Eingangsdaten (13) der mindestens einen inneren Schicht (5-i) die Aktivierungen (14) der jeweils voranstehenden Schicht (5-x) zumindest teilweise verändert werden, wobei das statistische Modell (7) zugehörig zur mindestens einen inneren Schicht (5-i) statistische Eigenschaften der Aktivierungen (14) der jeweils voranstehenden Schicht (5-x) für den Fall abbildet, dass dem Neuronalen Netz (5) die Trainingsdaten (30) des Trainingsdatensatzes zugeführt werden, mit dem das Neuronale Netz (5) trainiert wurde.

4.  Verfahren nach einem der vorangegangenen Ansprüche, **dadurch gekennzeichnet, dass** das statistische Modell (7) während oder nach einer Trainingsphase des Neuronalen Netzes (5) ausgehend von dem Trainingsdatensatz mittels eines Backendservers erzeugt und der mindestens einen Manipulatoreinrichtung (6,8) bereitgestellt wird.

5.  Verfahren nach Anspruch 4, **dadurch gekennzeichnet, dass** eine Grundwahrheit (31) der Trainingsdaten (30) beim Erzeugen des statistischen Modells (7) berücksichtigt wird.

6.  Verfahren nach einem der vorangegangenen Ansprüche, **dadurch gekennzeichnet, dass** das statistische Modell (7) während der Anwendungsphase in Abhängigkeit eines aktuellen Kontextes der Eingangsdaten (11) des Neuronalen Netzes (5) ausgewählt wird.

7.  Verfahren nach einem der vorangegangenen Ansprüche, **dadurch gekennzeichnet, dass** eine Stärke des Veränderns der Eingangsdaten (11,13) mittels mindestens eines Anpassungsparameters ($\varepsilon$) vorgegeben wird.

8.  Verfahren nach Anspruch 7, **dadurch gekennzeichnet, dass** der mindestens eine Anpassungsparameter ($\varepsilon$) einen Schwellenwert für ein aus den unveränderten Eingangsdaten (11,13) und zugehörigen veränderten Eingangsdaten (12,15) bestimmtes Abstandsmaß vorgibt.

9.  Verfahren nach Anspruch 7 oder 8, **dadurch gekennzeichnet, dass** der mindestens eine Anpassungsparameter ($\varepsilon$) in Abhängigkeit der mindestens einen Schicht (5-0,5-x,5-i) und/oder eines Elementes der mindestens einen Schicht (5-0,5-x,5-i) vorgegeben wird oder vorgegeben ist.

10.  Verfahren nach einem der vorangegangenen Ansprüche, **dadurch gekennzeichnet, dass** das Neuronale Netz (5) eine Funktion für das automatisierte Fahren eines Kraftfahrzeugs (50) und/oder für eine Fahrerassistenz des Kraftfahrzeugs (50) und/oder für eine Umfelderfassung bereitstellt.

11.  Vorrichtung zum Bereitstellen eines gegen adversariale Störungen robustifizierten Neuronalen Netzes (5), wobei dem Neuronalen Netz (5) Sensordaten (10) eines Sensors (51) eines Kraftfahrzeugs (50) zugeführt werden, umfassend:

eine Datenverarbeitungseinrichtung (2) zum Bereitstellen des Neuronalen Netzes (5), und mindestens eine Manipulatoreinrichtung (6,8), wobei die mindestens eine Manipulatoreinrichtung (6,8) dazu eingerichtet ist, während einer Anwendungsphase des Neuronalen Netzes (5) Eingangsdaten (11,13) mindestens einer Schicht (5-0,5-x,5-i) des Neuronalen Netzes (5), bevor diese der mindestens einen Schicht (5-0,5-x,5-i) zugeführt werden, zumindest teilweise derart zu verändern, dass die veränderten Eingangsdaten (12,15) gemäß einem der mindestens einen Manipulatoreinrichtung (6,8) bereitgestellten statistischen Modell (7) statistisch wahrscheinlicher sind als die unveränderten Eingangsdaten (11,13) der mindestens einen Schicht (5-0,5-x,5-i),

wobei das statistische Modell (7) jeweils statistische Eigenschaften von Eingangsdaten (11,13) der mindestens einen Schicht (5-0,5-x,5-i) für den Fall abbildet, dass dem Neuronalen Netz (5) Trainingsdaten (30) eines Trainingsdatensatzes zugeführt werden, mit dem das Neuronale Netz (5) trainiert wurde.

12.  Kraftfahrzeug (50), umfassend mindestens eine Vorrichtung nach Anspruch 11.

13.  Computerprogramm, umfassend Befehle, die bei der Ausführung des Computerprogramms durch einen Computer diesen veranlassen, das Verfahren gemäß einem der Ansprüche 1 bis 10 auszuführen.

14.  Datenträgersignal, das das Computerprogramm nach Anspruch 13 überträgt.

**Claims**

1.  Computer-implemented method for making a neural network (5) more robust against adversarial disruptions, wherein the neural network (5) is supplied with sensor data (10) from a sensor (51) of a motor vehicle (50),

wherein, by means of at least one manipulator device (6, 8), during a use phase of the neural network (5), input data (11, 13) of at least one layer (5-0, 5-x, 5-i) of the neural network (5) are at least partially modified, before being supplied to the at least one layer (5-0, 5-x, 5-i), in such a way that the modified input data (12, 15) are statistically more probable than the unmodified input data (11, 13) of the at least one layer (5-0, 5-x, 5-i), according to a statistical model (7) provided to the at least one manipulator device (6, 8),

wherein the statistical model (7) in each case maps statistical properties of input data (11, 13) of the at least one layer (5-0, 5-x, 5-i) in the event that the neural network (5) is supplied with training data (30) of a training data set on which the neural network (5) was trained.

2. Method according to claim 1, **characterized in that** the at least one layer (5-0, 5-x, 5-i) comprises an input layer (5-0) of the neural network (5), the statistical model (7) assigned to the input layer (5-0) mapping statistical properties of the training data (30) of the training data set.

3. Method according to claim 1 or 2, **characterized in that** the at least one layer (5-0, 5-x, 5-i) comprises at least one inner layer (5-i) of the neural network (5), corresponding input data (13) of the at least one inner layer (5-i) being activations (14) of a relevant preceding layer (5-x) of the neural network (5), and the activations (14) of each preceding layer (5-x) being at least partially modified in order to modify the input data (13) of the at least one inner layer (5-i), the statistical model (7) assigned to the at least one inner layer (5-i) mapping statistical properties of the activations (14) of the relevant preceding layer (5-x) in the event that the neural network (5) is supplied with the training data (30) of the training data set on which the neural network (5) was trained.

4. Method according to any of the preceding claims, **characterized in that** the statistical model (7) is generated during or after a training phase of the neural network (5), based on the training data set, by means of a backend server, and is provided to the at least one manipulator device (6, 8).

5. Method according to claim 4, **characterized in that** a ground truth (31) of the training data (30) is considered when generating the statistical model (7).

6. Method according to any of the preceding claims, **characterized in that** the statistical model (7) is selected during the use phase, depending on a current context of the input data (11) of the neural network (5).

7. Method according to any of the preceding claims, **characterized in that** a strength of the modification of the input data (11, 13) is specified by means of at least one adjustment parameter ($\varepsilon$).

8. Method according to claim 7, **characterized in that** the at least one adjustment parameter ($\varepsilon$) specifies a threshold value for a distance measure determined from the unmodified input data (11, 13) and corresponding modified input data (12, 15).

9. Method according to claim 7 or 8, **characterized in that** the at least one adjustment parameter ($\varepsilon$) has been predetermined or is predetermined depending on the at least one layer (5-0, 5-x, 5-i) and/or an element of the at least one layer (5-0, 5-x, 5-i).

10. Method according to any of the preceding claims, **characterized in that** the neural network (5) provides a function for automated driving of a motor vehicle (50) and/or for driver assistance of the motor vehicle (50) and/or for detecting surroundings.

11. Apparatus for providing a neural network (5) which has been made more robust against adversarial disruptions, wherein the neural network (5) is supplied with sensor data (10) from a sensor (51) of a motor vehicle (50), comprising:

a data processing device (2) for providing the neural network (5), and at least one manipulator device (6, 8),
wherein the at least one manipulator device (6, 8) is designed toto at least partially modify input data (11, 13) of at least one layer (5-0, 5-x, 5-i) of the neural network (5) during a use phase of the neural network (5), before said data are supplied to the at least one layer (5-0, 5-x, 5-i), in such a way that the modified input data (12, 15) are statistically more probable than the unmodified input data (11, 13) of the at least one layer (5-0, 5-x, 5-i), according to a statistical model (7) provided to the at least one manipulator device (6, 8),
wherein the statistical model (7) in each case maps statistical properties of input data (11, 13) of the at least one layer (5-0, 5-x, 5-i) in the event that the neural network (5) is supplied with training data (30) of a training data set on which the neural network (5) was trained.

12. Motor vehicle (50), comprising at least one apparatus according to claim 11.

13. Computer program comprising commands which, when the computer program is executed by a computer, cause the computer to execute the method according to any of claims 1 to 10.

14. Data carrier signal which transmits the computer program according to claim 13.

**Revendications**

1. Procédé mis en œuvre par ordinateur pour la robustification d'un réseau neuronal (5) contre des perturbations antagonistes, dans lequel des données de capteur (10) d'un capteur (51) d'un véhicule automobile (50) sont amenées au réseau neuronal (5),

dans lequel des données d'entrée (11, 13) d'au moins une couche (5-0, 5-x, 5-i) du réseau neuronal (5) sont, au moyen d'au moins un dispositif de manipulation (6, 8), au moins partiellement modifiées pendant une phase d'application du réseau neuronal (5), avant que celles-ci ne soient amenées à l'au moins une couche (5-0, 5-x, 5-i), de telle sorte que les données d'entrée modifiées (12, 15) sont statistiquement plus probables que les données d'entrée non modifiées (11, 13) de l'au moins une couche (5-0, 5-x, 5-i), conformément à un modèle statistique (7) fourni à l'au moins un dispositif de manipulation (6, 8), dans lequel le modèle statistique (7) reproduit respectivement des propriétés statistiques de données d'entrée (11, 13) de l'au moins une couche (5-0, 5-x, 5-i) dans le cas où des données d'entraînement (30) d'un jeu de données d'entraînement sont amenées au réseau neuronal (5), jeu avec lequel le réseau neuronal (5) a été entraîné.

2. Procédé selon la revendication 1, **caractérisé en ce que** l'au moins une couche (5-0, 5-x, 5-i) comprend une couche d'entrée (5-0) du réseau neuronal (5), dans lequel le modèle statistique (7) associé à la couche d'entrée (5-0) reproduit des propriétés statistiques des données d'entraînement (30) du jeu de données d'entraînement.

3. Procédé selon la revendication 1 ou 2, **caractérisé en ce que** l'au moins une couche (5-0, 5-x, 5-i) comprend au moins une couche interne (5-i) du réseau neuronal (5), dans lequel des données d'entrée (13) associées de l'au moins une couche interne (5-i) sont des activations (14) d'une couche (5-x) respectivement précédente du réseau neuronal (5), et dans lequel, pour modifier les données d'entrée (13) de l'au moins une couche interne (5-i), les activations (14) de la couche (5-x) respectivement précédente sont modifiées au moins partiellement, dans lequel le modèle statistique (7) associé à l'au moins une couche interne (5-i) reproduit des propriétés statistiques des activations (14) de la couche (5-x) respectivement précédente dans le cas où les données d'entraînement (30) du jeu de données d'entraînement, avec lequel le réseau neuronal (5) a été entraîné, sont amenées au réseau neuronal (5).

4. Procédé selon l'une des revendications précédentes, **caractérisé en ce que** le modèle statistique (7) est généré pendant ou après une phase d'entraînement du réseau neuronal (5) à partir du jeu de données d'entraînement au moyen d'un serveur dorsal et est fourni à l'au moins un dispositif de manipulation (6, 8).

5. Procédé selon la revendication 4, **caractérisé en ce qu'**une vérité fondamentale (31) des données d'entraînement (30) est prise en compte lors de la génération du modèle statistique (7).

6. Procédé selon l'une des revendications précédentes, **caractérisé en ce que** le modèle statistique (7) est sélectionné pendant la phase d'application en fonction d'un contexte actuel des données d'entrée (11) du réseau neuronal (5).

7. Procédé selon l'une des revendications précédentes, **caractérisé en ce qu'**une intensité de modification des données d'entrée (11, 13) est prédéfinie au moyen d'au moins un paramètre d'ajustement ($\varepsilon$).

8. Procédé selon la revendication 7, **caractérisé en ce que** l'au moins un paramètre d'ajustement ($\varepsilon$) prédéfinit une valeur seuil pour une mesure de distance déterminée à partir des données d'entrée non modifiées (11, 13) et des données d'entrée modifiées (12, 15) associées.

9. Procédé selon la revendication 7 ou 8, **caractérisé en ce que** l'au moins un paramètre d'ajustement ($\varepsilon$) sera prédéfini ou est prédéfini en fonction de l'au moins une couche (5-0, 5-x, 5-i) et/ou d'un élément de l'au moins une couche (5-0, 5-x, 5-i).

10. Procédé selon l'une des revendications précédentes, **caractérisé en ce que** le réseau neuronal (5) fournit une fonction pour la conduite automatisée d'un véhicule automobile (50) et/ou pour une assistance au conducteur du véhicule automobile (50) et/ou pour une détection d'environnement.

11. Dispositif pour la fourniture d'un réseau neuronal (5) robustifié contre des perturbations antagonistes, dans lequel des données de capteur (10) d'un capteur (51) d'un véhicule automobile (50) sont amenées au réseau neuronal (5), comprenant :

　　un dispositif de traitement de données (2) pour fournir le réseau neuronal (5), et au moins un dispositif de manipulation (6, 8),
　　dans lequel l'au moins un dispositif de manipulation (6, 8) est conçu pour, pendant une phase d'application du réseau neuronal (5), modifier au moins partiellement des données d'entrée (11, 13) d'au moins une couche (5-0, 5-x, 5-i) du réseau neuronal (5) avant que celles-ci ne soient fournies à l'au moins une couche (5-0, 5-x, 5-i), de telle sorte que les données d'entrée modifiées (12, 15) sont statistiquement plus probables que les données d'entrée non modifiées (11, 13) de l'au moins une couche (5-0, 5-x, 5-i), conformément à un modèle statistique (7) fourni à l'au moins un dispositif de manipulation (6, 8), dans lequel le modèle statistique (7) reproduit respectivement des propriétés statistiques de données d'entrée (11, 13) de l'au moins une couche (5-0, 5-x, 5-i) dans le cas où des données d'entraînement (30) d'un jeu de données d'entraînement sont amenées au réseau neuronal (5), jeu avec lequel le réseau neuronal (5) a été entraîné.

12. Véhicule automobile (50) comprenant au moins un dispositif selon la revendication 11.

13. Programme informatique, comprenant des instructions qui, lors de l'exécution du programme informatique par un ordinateur, amènent celui-ci à exécuter le procédé selon l'une des revendications 1 à 10.

14. Signal de support de données transmettant le programme informatique selon la revendication 13.

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018115440 A1

**In der Beschreibung aufgeführte Nicht-Patentliteratur**

- Defending against Adversarial Attacks through Resilient Feature Regeneration. **TEJAS BORKAR et al.** ARXIV.ORG. CORNELL UNIVERSITY LIBRARY, 201 OLIN LIBRARY CORNELL UNIVERSITY, 08 June 2019

- Simple Physical Adversarial Examples against End-to-End Autonomous Driving Models. **ADITH BOLOOR et al.** 2019 IEEE INTERNATIONAL CONFERENCE ON EMBEDDED SOFTWARE AND SYSTEMS (ICESS). IEEE, 02 June 2019, 1-7